# DEMANDE DE BREVET EUROPEEN

(11) **EP 4 234 099 A1**
(43) Date de publication de la demande: **30.08.2023**
(21) Numéro de dépôt: 23158164.6
(22) Date de dépôt: 23.02.2023
(51) Int. Cl.: B05B 12/14, B05B 13/04

(54) **DISPOSITIF D'ALIMENTATION D'UN PULVÉRISATEUR, MODULES POUR UN TEL DISPOSITIF D'ALIMENTATION ET INSTALLATION D'APPLICATION DE PRODUIT DE REVÊTEMENT COMPRENANT UN TEL DISPOSITIF D'ALIMENTATION**

(30) Priorité: 24.02.2022 FR 2201632
(71) Demandeur: Exel Industries, 51200 Epernay (FR)
(72) Inventeur: VANZETTO, Denis, 51200 EPERNAY (FR); TARANTINI, Joseph, 51200 EPERNAY (FR)
(74) Mandataire: Lavoix

(57) **Abrégé**

Ce dispositif d'alimentation d'un pulvérisateur en produit de revêtement et/ou en produit de nettoyage a une structure annulaire et comprend une platine annulaire (110), plusieurs modules de connexion (120), plusieurs modules de fonction (140) et plusieurs modules d'entrée (150). Chaque module de connexion (120) est monté, de façon amovible, en appui contre un côté (110B) de la platine annulaire. Chaque module de fonction (140) est monté, de façon amovible, sur une face externe d'un module de connexion. Chaque module de fonction (140) est raccordé fluidiquement au module de connexion (120) sur lequel il est monté. Chaque module d'entrée (150) est monté, de façon amovible, sur une face d'entrée d'un module de connexion (120). Chaque module d'entrée (150) porte des éléments de raccord fluidique accessibles sur une face de ce module d'entrée orientée à l'opposé du module de connexion (120) sur la face d'entrée duquel il est monté.

## Description

La présente invention concerne un dispositif d'alimentation d'un pulvérisateur en produit de revêtement et/ou en produit de nettoyage. La présente invention concerne également des modules formant pièces détachées pour un tel dispositif d'alimentation, ainsi qu'une installation d'application de produit de revêtement qui comprend un robot, de préférence multiaxe, ainsi qu'un pulvérisateur monté sur un bras de ce robot et alimenté en produit de revêtement et/ou en produit de nettoyage par un dispositif d'alimentation.

Le domaine technique de l'invention est celui de l'application de produit de revêtement, notamment par pulvérisation électrostatique, sur des objets tels que des carrosseries de véhicule automobile, des composants de véhicule ou d'appareil électroménager et, plus généralement, tout objet devant recevoir une couche de produit de revêtement.

Dans ce domaine, il est connu de EP-A-1543883 d'utiliser un système de vannes pour alimenter un pulvérisateur avec un produit bi-composant, ce système de vannes étant monté à proximité du pulvérisateur.

Il est également connu de JP-A-6-246200 d'installer, en amont d'un pulvérisateur, un ensemble de vannes de peinture disposées en une ou plusieurs rangées et qui alimentent un collecteur sur lequel sont montées une vanne d'air et une vanne de solvant. Cet ensemble de vannes est volumineux, au point qu'il doit être disposé à distance du pulvérisateur, avec interposition d'une pompe d'aspiration. Ceci induit des pertes de peinture et de solvant importantes en cas de changement de couleur de la peinture projetée.

D'autre part, il est connu de EP-A-1502658 de monter un ensemble de vannes et un projecteur à l'extrémité du bras d'un robot. Des vannes de changement de couleur sont disposées dans des unités juxtaposées et débouchent dans un canal collecteur rectiligne et central, en étant réparties autour de celui-ci, dans des plans adjacents. Cette construction est difficile à mettre en oeuvre, notamment lorsqu'il s'agit de l'adapter au nombre de produits de revêtement à distribuer ou à leur nature, par exemple mono- ou bi-composant. Le montage ou le démontage d'une unité de vannes influe sur le positionnement des autres unités de vannes. En outre, lorsque cet ensemble de vannes est intégré à l'extrémité du bras d'un robot, il peut gêner le passage de tuyaux d'air de pilotage ou de câbles électriques d'alimentation du pulvérisateur.

Le matériels connus comprennent des blocs de vannes spécifiques pour chaque application, qui sont parfois conçus en fonction des prescriptions de l'utilisateur final d'une installation d'application incorporant, entre autres, un pulvérisateur et un dispositif d'alimentation associés. Ainsi, de nombreux blocs spécifiques doivent être conçus et fabriqués, ce qui est pénalisant, notamment en termes de prix de revient et de gestion de stocks. En outre, ces différents blocs spécifiques requièrent des opérations de maintenance propres, ce qui est désavantageux sur le plan économique.

D'autre part, au cours de la durée de vie d'une installation d'application, le dispositif d'alimentation du pulvérisateur en produit de revêtement et/ou en produit de nettoyage doit parfois évoluer pour tenir compte d'une adaptation du procédé de peinture mis en oeuvre. Avec les matériels connus, une telle évolution est complexe à mettre en oeuvre et consommatrice de temps.

C'est à ces inconvénients qu'entend plus particulièrement remédier l'invention en proposant un nouveau dispositif d'alimentation d'un pulvérisateur en produit de revêtement et/ou en produit de nettoyage qui présente une modularité améliorée, au point qu'il peut être facilement configuré pour répondre à ses conditions d'utilisation, à partir d'éléments standardisés.

A cet effet, l'invention concerne un dispositif d'alimentation d'un pulvérisateur en produit de revêtement et/ou en en produit de nettoyage, ce dispositif comprenant au moins une vanne pilotée, un conduit d'amenée de produit à la vanne et au moins un conduit d'alimentation du pulvérisateur à partir de la vanne. Conformément à l'invention,
- le dispositif d'alimentation a une structure annulaire et comprend
   - une platine annulaire,
   - plusieurs modules de connexion,
   - plusieurs modules de fonction et
   - plusieurs modules d'entrée;
- la platine est équipée d'orifices traversant;
- chaque module de connexion est monté, de façon amovible, en appui, par une face de contact, contre un côté de la platine annulaire ;
- chaque module de connexion comprend au moins un conduit d'amenée de produit à au moins une vanne pilotée;
- chaque module de fonction est monté, de façon amovible, sur une face externe d'un module de connexion distincte de sa face de contact avec la platine annulaire ;
- chaque module de fonction est raccordé fluidiquement au conduit d'amenée du module de connexion sur la face externe duquel il est monté;
- chaque module de fonction comprend, soit au moins une vanne pilotée et au moins un conduit, soit un tronçon de conduit destiné à être mis à la terre ;
- chaque module d'entrée est monté, de façon amovible, sur une face d'entrée d'un module de connexion qui est opposée à sa face de contact ; et
- chaque module d'entrée porte des éléments de raccord fluidique accessibles sur une face de ce module d'entrée orientée à l'opposé du module de connexion sur la face d'entrée duquel il est monté.

Grâce à l'invention, la platine permet de conférer une forme globalement annulaire au dispositif d'alimentation et de supporter les différents types de modules. Les modules de connexion permettent de créer un circuit d'alimentation, à partir des modules d'entrée, des vannes et/ou conduits qui appartiennent aux modules de fonction. Les modules d'entrée permettent, quant à eux, un raccordement facilité du dispositif d'alimentation avec les tuyaux d'amenée de produit de revêtement ou de nettoyage. Le caractère amovible du montage des différents modules facilite les opérations de maintenance et l'adaptation du dispositif d'alimentation à ses conditions d'utilisation.

Selon des aspects avantageux mais non obligatoires de l'invention, un tel dispositif d'alimentation peut incorporer une ou plusieurs des caractéristiques suivantes prises selon toute combinaison techniquement admissible :
- Des corps de tous les modules d'entrée, qui sont équipés des éléments de raccord fluidique, sont identiques entre eux.
- Au moins un module d'entrée, et de préférence chaque module d'entrée, est équipé d'une étiquette qui porte des marques de repérage de ses éléments de raccord fluidique, cette étiquette étant, de préférence, apposée sur une face du module d'entrée qui prolonge la face externe du module de connexion sur la face d'entrée duquel est monté le module d'entrée.
- Au moins un module de fonction, de préférence chaque module de fonction, et/ou la platine est équipé d'une étiquette de repérage de vannes, de conduits ou de raccords, cette étiquette étant montée de façon amovible sur une partie fixe du module de fonction ou de la platine.
- Chaque module de connexion porte au moins un module de fonction sur sa face externe et un unique module d'entrée sur sa face d'entrée.
- Les modules de connexion définissent ensemble une structure annulaire ou une structure en portion d'anneau, au sein de laquelle s'étend un circuit de contrôle qui passe par chaque module de connexion.
- Le dispositif comprend des barres parallèles qui supportent la platine annulaire et en ce que chaque module de connexion et/ou chaque module d'entrée est en appui sur une paire de deux barres parallèles adjacentes.
- La platine annulaire est en matériau électriquement conducteur et chaque module de connexion, comprend au moins un insert taraudé, en matériau électriquement conducteur, chaque insert taraudé étant configuré pour recevoir une vis de montage d'un module de connexion sur la platine annulaire et/ou sur un module de connexion adjacent, d'un module de fonction sur un module de connexion ou d'un module d'entrée sur un module de connexion, alors que les vis et les inserts taraudés forment ensemble une piste équipotentielle entre les modules de connexion, les modules de fonction, les modules d'entrée et la platine annulaire.

L'invention concerne également des modules formant pièces détachées pour un dispositif d'alimentation tel que mentionné ci-dessus.

Un tel module peut être un module de connexion comprenant une face de contact destinée à venir en appui, de façon amovible, contre un côté de la platine annulaire, une face externe distincte de la face de contact et destinée à recevoir, de façon amovible, au moins un module de fonction, et une face d'entrée opposée à sa face de contact et destinée à recevoir en appui, de façon amovible, un module d'entrée.

Un tel module peut également être un module de fonction comprenant au moins une vanne pilotée, au moins un conduit interne et des moyens de montage amovible sur une face externe du module de connexion.

Un tel module peut également être un module d'entrée comprenant une première face destinée à venir en appui, de façon amovible, contre une face d'entrée d'un module de connexion et une deuxième face, opposée à la première face et par laquelle sont accessibles des embouchure d'éléments de raccord fluidique portés par le module d'entrée.

Selon un autre aspect, l'invention concerne une installation d'application de produit de revêtement qui comprend un robot, de préférence multiaxe, et un pulvérisateur monté sur un bras du robot et alimenté en produit de revêtement et/ou en produit de nettoyage par un dispositif d'alimentation tel que mentionné ci-dessus.

Les avantages de cette installation découlent de ceux de son dispositif d'alimentation en produit de revêtement et/ou en produit de nettoyage.

Avantageusement, des conduits d'alimentation en air de commande de pneumo-vannes, un connecteur et/ou des câbles d'alimentation électrique du pulvérisateur en haute-tension traversent ou sont logés dans une zone centrale du dispositif d'alimentation définie par de la platine annulaire.

L'invention sera mieux comprise et d'autres avantages de celle-ci apparaîtront plus clairement à la lumière de la description qui va suivre de deux modes de réalisation d'un dispositif d'alimentation et d'une installation d'application conformes à son principe, donnée uniquement à titre d'exemple et faite en référence aux dessins annexés dans lesquels :
[Fig 1] la figure 1 est une représentation schématique de principe, en perspective, d'une installation d'application de produit de revêtement conforme à l'invention et incorporant un dispositif d'alimentation conforme à l'invention ;
[Fig 2] la figure 2 est une vue à plus grande échelle de détail II à la figure 1 ;
[Fig 3] la figure 3 représente la même partie de l'installation que celle visible à la figure 2, respectivement en perspective et en coupe et en perspective, selon deux angles différents de celui de la figure 2 ;
Ffig 4] la figure 4 est une vue en perspective d'un dispositif d'alimentation conforme à l'invention appartenant à l'installation des figures 1 à 3 ; sur cette figure, l'insert A) correspond à une coupe partielle selon le plan A ;
[Fig 5] la figure 5 est une coupe le plan P5 à la figure 4 ;
[Fig 6] la figure 6 est une coupe en perspective selon le plan P6 à la figure 4 ;
[Fig 7] la figure 7 est une vue à plus grande échelle du détail VII de la figure 2, coupé selon le plan P7 ;
[Fig 8] la figure 8 représente deux vues en perspective, selon deux angles différents, d'un module d'entrée appartenant au dispositif d'alimentation des figures 4 à 6 ;
[Fig 9] la figure 9 représente, en perspective, trois modules de fonction appartenant au dispositif d'alimentation des figures 4 à 6, chaque module de fonction étant vu selon deux angles différents ;
[Fig 10] la figure 10 représente, à plus petite échelle, trois modules de connexion pouvant être utilisés dans le dispositif d'alimentation des figures 4 à 6, chaque module de connexion étant vu en perspective selon deux angles différents ;
[Fig 11] la figure 11 représente, à la même échelle que la figure 10, deux autres modules de connexion pouvant être utilisés dans le dispositif d'alimentation des figures 4 à 6, chaque module de connexion étant vu en perspective sous deux angles différents ;
[Fig 12] la figure 12 est une vue en perspective partiellement éclatée du dispositif d'alimentation des figures 4 à 6
[Fig 13] la figure 13 est une autre vue en perspective éclatée du dispositif d'alimentation des figures 4 à 6 et 12, avec un éclatement différent de celui de la figure 12 et
[Fig 14] la figure 14 représente un deuxième mode de réalisation d'un dispositif d'alimentation et d'une installation conformes à l'invention, au moyen d'une vue en perspective comparable à la figure 2 et d'une vue en perspective d'une partie d'un dispositif d'alimentation.

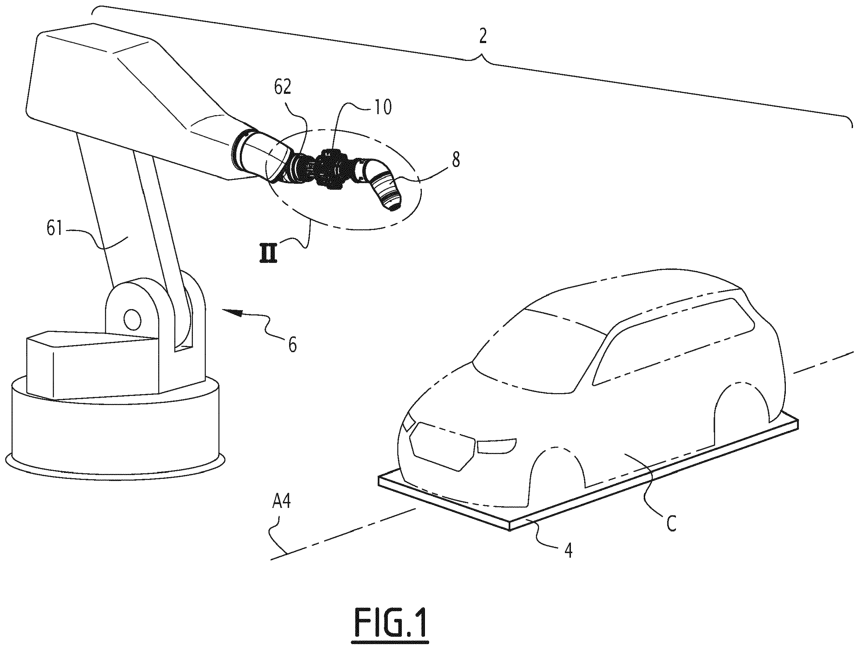

L'installation 2 représentée sur la figure 1 est conforme à l'invention et sert à appliquer un produit de revêtement, tel qu'une peinture ou un vernis, sur une carrosserie C de véhicule automobile déplacée par un convoyeur 4 le long d'un axe de convoyage A4. L'installation 2 comprend plusieurs robots, dont un seul est représenté sur la figure 1 avec la référence 6. Le bras 61 de chaque robot 6 porte un pulvérisateur 8 de produit de revêtement.

En pratique, et selon un aspect de l'invention qui n'est pas représenté, les robots 6 sont repartis le long de l'axe de convoyage A4, de part et d'autre du convoyeur 4.

Comme visible à la figure 1, le robot 6 est de type robot multiaxe. En variante, ce robot peut être d'un autre type, notamment de type réciprocateur.

A la figure 1, l'échelle des objets représentés n'est pas respectée. L'échelle du robot 6 et du pulvérisateur 8 est agrandie par rapport à celle de la carrosserie C.

Le pulvérisateur 8 est de type rotatif et comprend un corps 82 qui définit un axe longitudinal A8, ainsi qu'un bol 84 monté rotatif autour de l'axe A8 et entrainé en rotation au moyen d'une turbine non représentée, qui est avantageusement du type turbine à air.

Dans cet exemple, le pulvérisateur 8 est de type électrostatique et est associé à une unité haute tension 9 qui lui fournit une tension continue de l'ordre de -60 kV permettant de charger électrostatiquement le produit de revêtement pulvérisé par le bol 84 entrainé en rotation autour de l'axe A8.

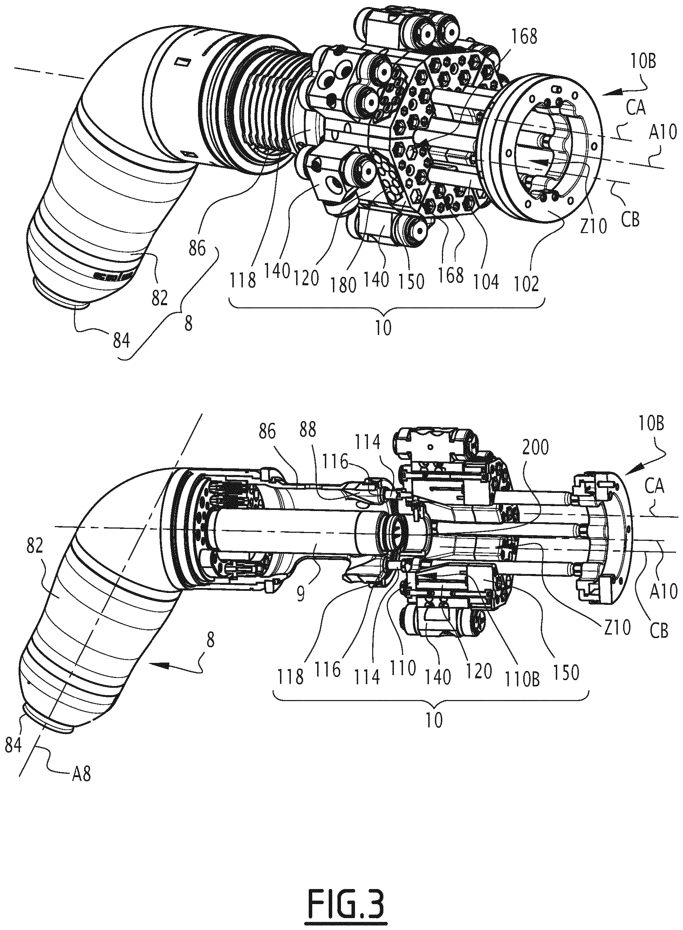

Comme visible en partie basse de la figure 3, l'unité haute tension 9 est logée dans une partie 86 du projecteur 8 disposée, par rapport au corps 82, à l'opposé du bol 84.

Un dispositif 10 d'alimentation du pulvérisateur 8 en produit de revêtement et en produit de nettoyage est intercalé entre le pulvérisateur 8 et un poignet 62 du robot 6 qui constitue l'extrémité du bras 61. Ce dispositif d'alimentation 10 réalise l'interface mécanique entre le poignet 62 et le pulvérisateur 8, ainsi que l'alimentation du pulvérisateur en produit de revêtement et en produit de nettoyage.

En particulier, le dispositif d'alimentation 10 supporte le pulvérisateur 8 à partir du poignet 62.

On note 10A le côté avant du dispositif d'alimentation 10 qui est tourné vers le pulvérisateur 8 en configuration montée du pulvérisateur 8 sur le dispositif 10. On note 10B le côté arrière du dispositif 10 qui est tourné vers le poignet de robot 62 en configuration montée du dispositif 10 sur le robot 6. De la même façon, un côté ou une face avant d'un élément constitutif du dispositif d'alimentation 10, qui est orienté vers le pulvérisateur 8 en configuration montée du pulvérisateur 8 sur le dispositif 10, porte la même référence que cet élément constitutif augmentée de la lettre A, alors qu'un côté ou une face arrière d'un tel élément constitutif, qui est orienté vers le poignet de robot 62 en configuration montée du dispositif 10 sur le robot 6, porte la même référence que cet élément constitutif augmentée de la lettre B.

Le dispositif d'alimentation 10 comprend, sur son côté arrière 10B, une bride 102 destinée à être immobilisée sur le poignet 62 du robot 6 par tout moyen approprié, notamment au moyen d'un filetage interne ou de vis non représentées.

Cette bride est circulaire et centrée sur un axe A10 qui est un axe longitudinal du dispositif d'alimentation 10.

Dans l'exemple des figures, les axes A8 et A10 ne sont pas parallèle et sont sécants, ce qui découle de la géométrie du corps 82.

En variante non représentée de l'invention, les axes A8 et A10 sont parallèles.

A partir de la bride 102, six tirants 104 s'étendent parallèlement à l'axe A10, à l'opposé du poignet 62, et sont chacun pourvus d'une extrémité filetée 106.

Le dispositif d'alimentation 10 comprend également une platine annulaire 110 qui est réalisée dans un matériau électriquement conducteur, tel que de l'aluminium, et qui constitue un châssis pour le dispositif d'alimentation 10. La platine 110 est pourvue de six orifices traversant 112 configurés pour recevoir chacun une extrémité 106 d'un tirant 104. Des écrous 114 sont vissés sur les extrémités 106 et permettent d'immobiliser la platine 110 sur les tirants 104. Ces écrous 114 sont au nombre de six et quatre d'entre eux sont équipés d'une collerette 116, ce qui permet d'accrocher sur la platine 110 une bague 118 qui est taraudée. Cette bague 118 permet de visser un embout fileté 88 qui constitue l'extrémité de la partie 86 du pulvérisateur 8, à l'opposé du corps 82.

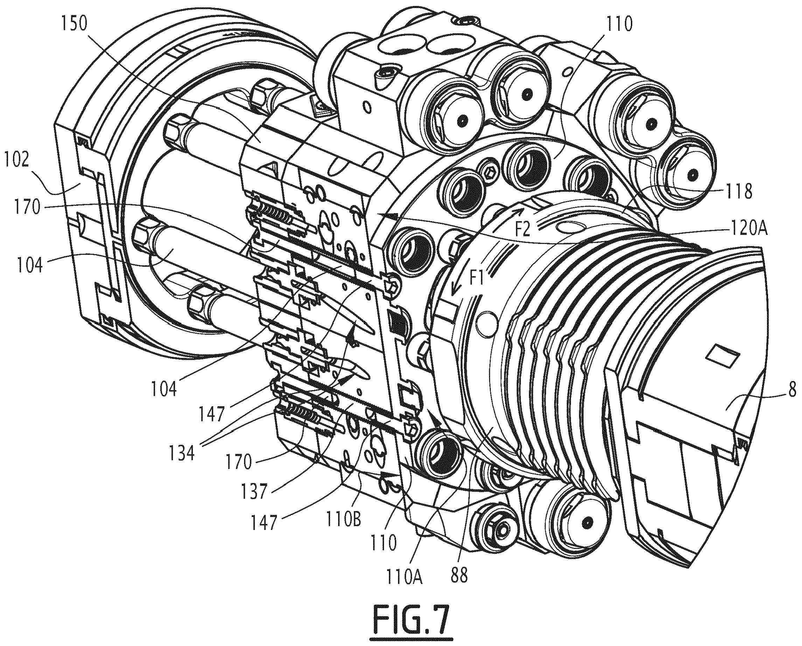

En pratique, lorsqu'il convient de monter le pulvérisateur 8 sur le robot 6 équipé du dispositif d'alimentation 10, l'embout fileté 88 est aligné sur l'axe A10 et rapproché de la bague bride 102, puis la bague taraudée 118, qui constitue un écrou de diamètre important, est mise en rotation dans le sens de la flèche F1 à la figure 7 pour être vissée sur l'embout fileté 88, jusqu'à immobiliser le pulvérisateur 8. A l'inverse, lorsqu'il convient de démonter le pulvérisateur 8, la bague 118 est mise en rotation dans le sens de la flèche F2 à la figure 7 pour la dévisser de l'embout fileté 88, avant d'écarter le pulvérisateur 8 du dispositif d'alimentation 10, le long de l'axe A10.

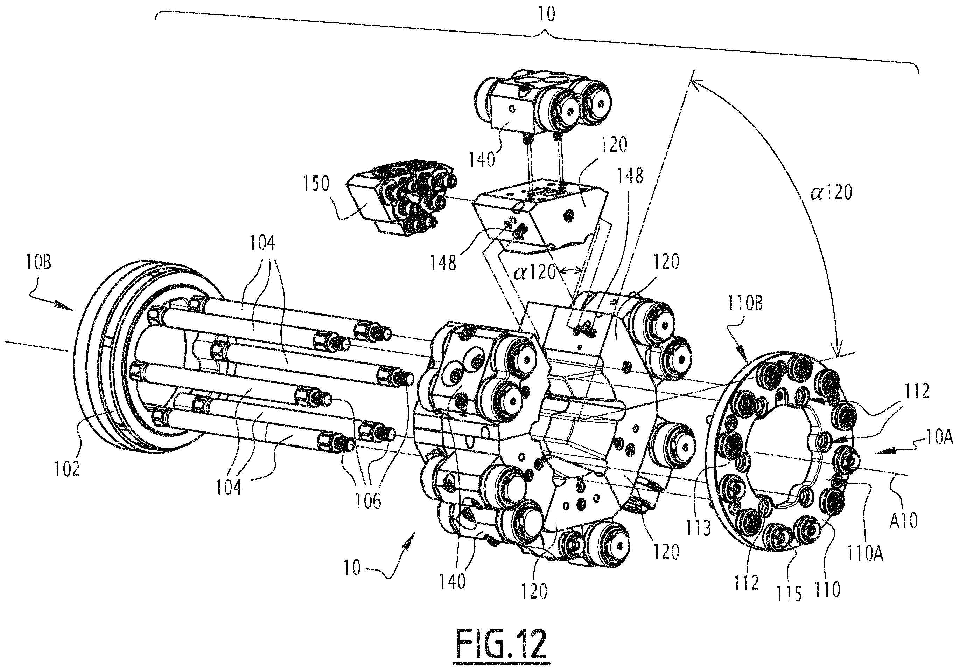

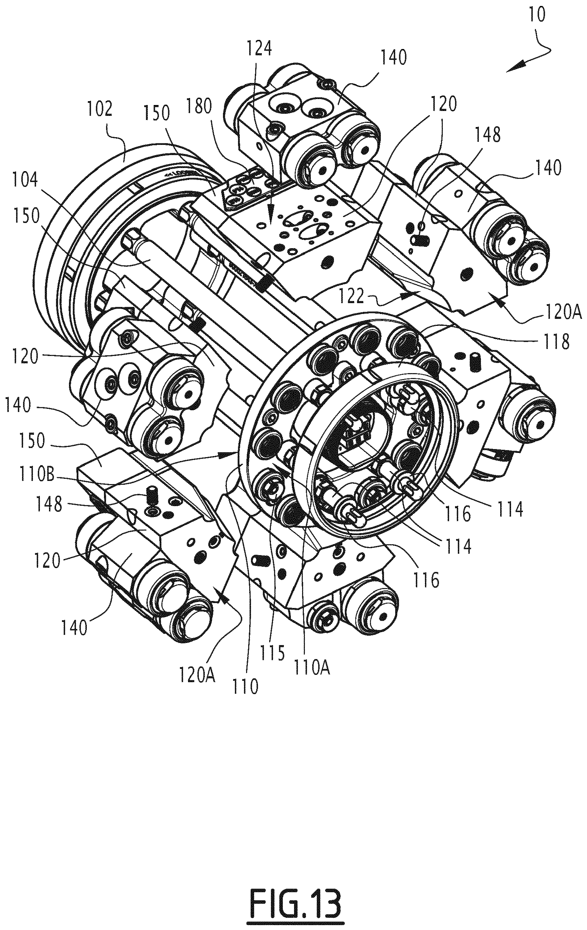

Pour la clarté du dessin, les écrous 114 et la bague 118 ne sont pas représentés à la figure 12. Ils sont toutefois visibles aux figures 1 à 3, 7 et 13.

Le dispositif d'alimentation 10 comprend également six modules de connexion 120. Dans l'exemple des figures 1 à 13, les six modules de connexion 120 constituent ensemble une structure annulaire qui s'étend tout autour de l'axe A10.

Chaque module de connexion 120 s'étend sur un secteur angulaire dont l'angle au sommet α120 est égal à 60°.

Chaque module de connexion 120 a une forme de cylindre à base globalement trapézoïdale et comprend une face interne 122 tournée vers l'axe A10 en configuration montée de ce module sur la platine 110, une face externe 124 tournée à l'opposé de l'axe A10 en configuration montée du module 120 sur la platine 110 et deux faces latérales 126 et 128 qui s'étendent chacune dans un plan radial à l'axe A10 en configuration montée du module 120 sur la platine 110. Deux modules 120 adjacents montés sur la platine 110 sont en contact par la face latérale 126 de l'un des modules et la face latérale 128 de l'autre module.

Chaque module 120 définit deux encoches 130 et 132, à la jonction entre sa face interne 122 et ses faces latérales 126 et 128.

Ces encoches 130 et 132 permettent de poser un module de connexion 120 en appui sur deux tirants 104 adjacents, en engageant la portion de ce module 120 qui définit sa face interne 122 entre ces deux tirants 104, depuis l'extérieur et en direction de l'axe A10, selon une direction radiale à cet axe, jusqu'à ce que les encoches 130 et 132 viennent coiffer partiellement ces deux tirants 104.

Il est alors possible de faire coulisser chaque module 120 vers le côté arrière 110B de la platine 110.

Chaque module de connexion 120 comporte une face avant 120A et une face arrière 120B, opposée à sa face avant.

Avantageusement, les faces avant et arrière 120A et 120B d'un module de connexion 120 sont parallèles.

Avantageusement, la face avant 120A d'un module de connexion est perpendiculaire à ses faces interne 122, externe 124 et latérales 126, 118.

Avantageusement, en configuration assemblée du dispositif d'alimentation 10, les faces 122, 124, 126 et 128 d'un module de connexion 120 sont parallèles à l'axe longitudinal A10 et les faces avant 120A et arrière 120B s'étendent chacune dans un plan radial à cet axe.

En configuration assemblée du dispositif d'alimentation 10, chaque module de connexion 120 est en appui par sa face avant 120A contre le côté arrière 110B de la platine 110. La face avant 120A d'un module 120 constitue ainsi sa face de contact avec la platine annulaire 110.

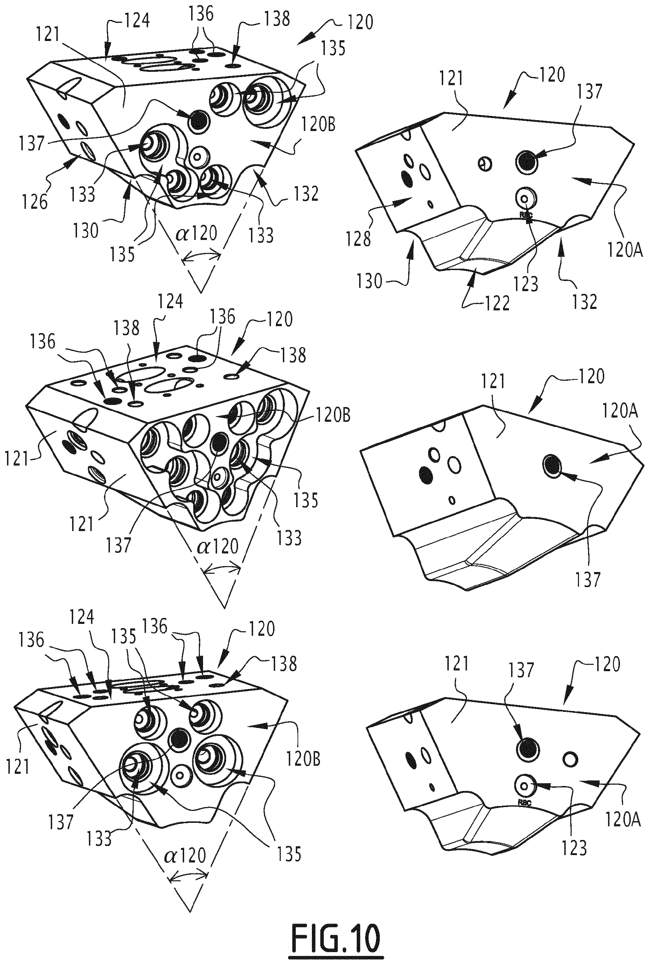

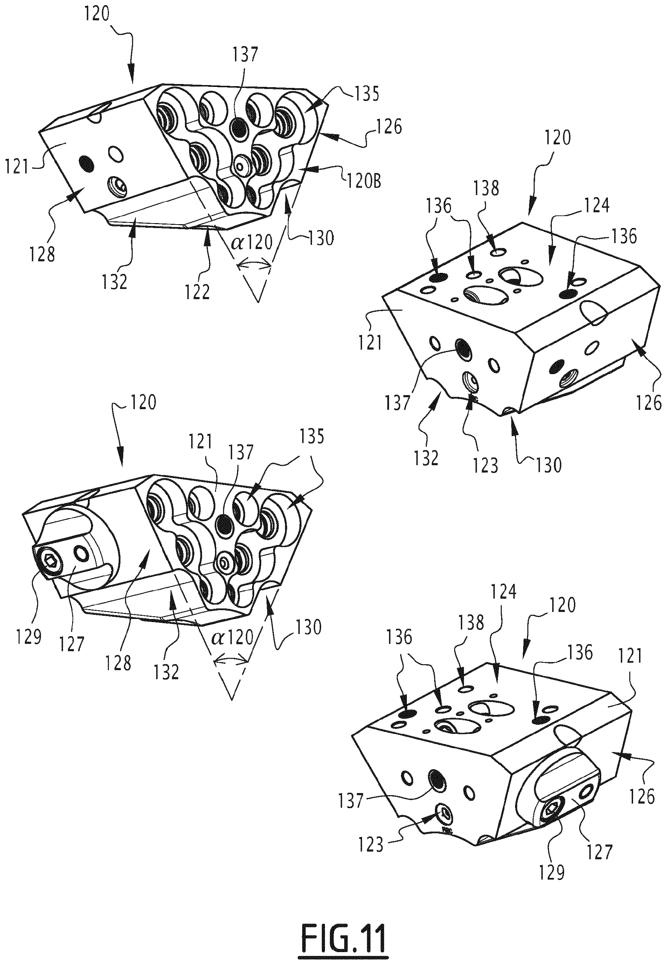

Comme cela ressort des figures 10 et 11, les modules de connexion 120 peuvent être de différents types. Chaque module de connexion 120 comprend un corps 121 qui peut être en, dans le cas général, en matériau synthétique, par exemple un plastique polyoxyméthylène, de préférence sous forme copolymère telle que le PomC, ou en métal, notamment en acier inoxydable, dans certains cas. Chaque module de connexion 120 définit un ou plusieurs conduits de circulation de fluide. Ce conduit peut être un conduit de circulation de produit de revêtement, un conduit de circulation de produit de nettoyage ou un conduit de circulation d'air de commande. Ces différents conduits sont agencés de manière à être raccordés fluidiquement à des composants fluidiques, par exemple des vannes appartenant à des modules de fonction 140, les modules de fonction 140 permettant ainsi de piloter la distribution de produit de revêtement, de produit de nettoyage ou d'air de commande. Les différents conduits des modules de connexion 120 permettent également de créer un circuit C138 pneumatique de contrôle.

Le dispositif d'alimentation 10 comprend plusieurs modules de fonction 140 qui sont chacun montés sur la face externe 124 d'un module de connexion 120.

Avantageusement, les modules de fonction 140 sont agencés de manière à former un circuit minimisant les zones mortes, c'est-à-dire des tronçons de conduites qui sont raccordées au circuit de circulation de produit mais qui sont situés hors du flux. Ces zones mortes, aussi appelées doigts de gants, sont remplies de produit lorsque le circuit est alimenté, et doivent être nettoyées lorsque le circuit est vidangé, ce qui représente une perte de produit de revêtement. Les vannes des modules de fonction 140 sont ainsi disposées et commandées de manière à limiter la présence de zones mortes dans le circuit.

Ceci permet d'optimiser les encours, donc les pertes de produit lors d'un changement de produit, et d'améliorer les performances lors des rinçages, en termes de quantité de produit consommé et de temps.

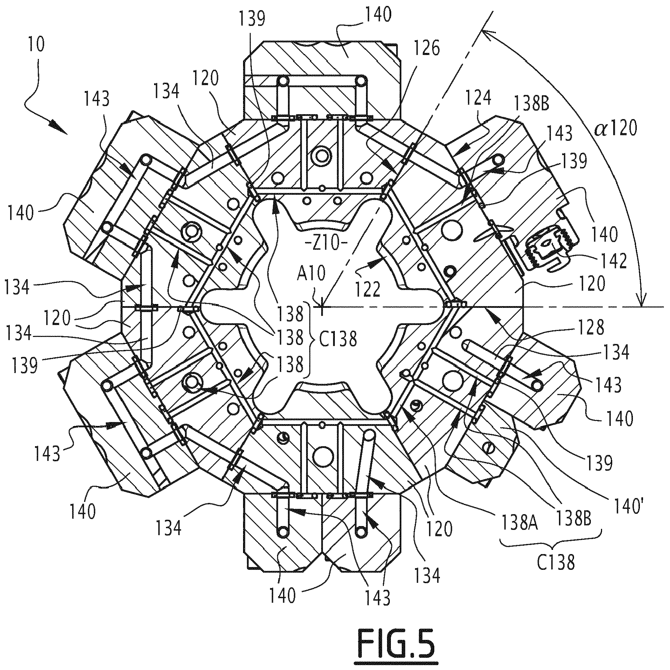

Comme cela ressort de la figure 5, le corps 121 de chaque module connexion 120 comprend un ou plusieurs conduits 134 de circulation de produit de revêtement ou de produit de nettoyage. La géométrie et l'emplacement des conduits 134 varie d'un type de module de connexion 120 à un autre, en fonction du type du module de fonction qui est monté sur sa face externe 124. En d'autre termes, la géométrie du corps 121 des différents modules de connexion 120 est variable selon le type de chaque module de connexion, qui dépend du type de module de fonction qui lui est associé.

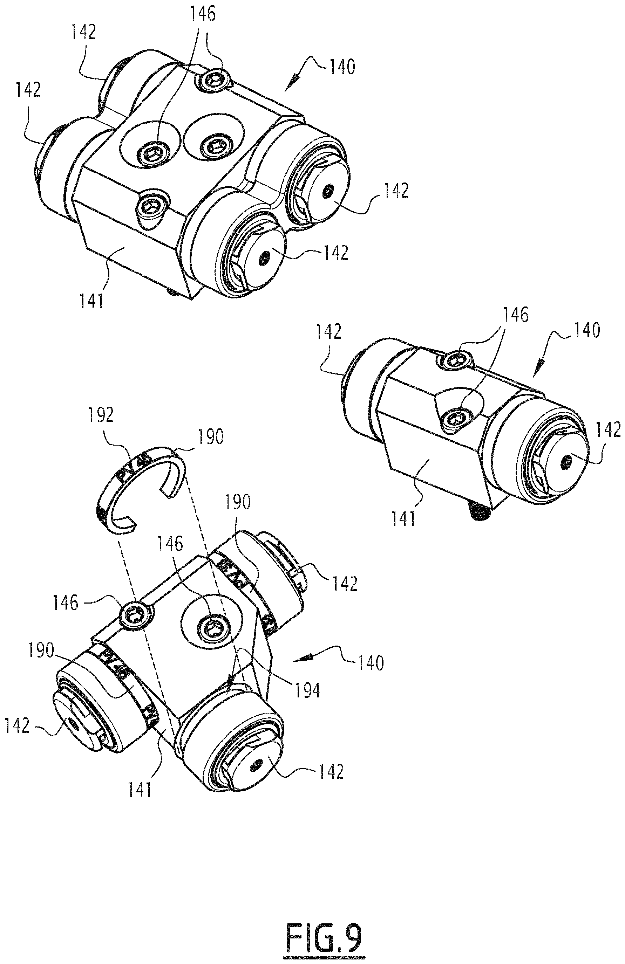

Trois types de module de fonction sont représentés à la figure 9.

Le module de fonction 140 d'un premier type représenté en partie supérieure de la figure 9 est un module de fonction qui comprend quatre pneumo-vannes 142, ce qui permet d'alimenter un conduit 143 de distribution de produit de revêtement, visible à la figure 5 et formant un collecteur commun, à partir de quatre produits de revêtement différents, par exemple quatre peintures de teintes différentes.

Ce module de fonction 140 comprend un corps 141 qui est, dans le cas général, en matériau synthétique, par exemple un plastique polyoxyméthylène, de préférence sous forme copolymère telle que le PomC, ou en métal, notamment en acier inoxydable dans certains cas. Les vannes 142 sont reçues dans le corps 141 qui définit le conduit 143. Quatre vis 146 traversent le corps 141 de part en part et sont destinées à être vissées dans des inserts taraudés correspondant 136 qui débouchent sur la face externe 124 d'un module de connexion 120 adapté pour recevoir ce module de fonction 140. Les inserts taraudés 136 sont réalisés en matériau électriquement conducteur, par exemple en acier ou en laiton.

Le module de fonction 140 d'un deuxième type représenté en partie médiane de la figure 9 comprend deux vannes 142 montées dans son corps 141 qui définit un conduit interne 143 et qui est configuré pour être fixé sur un module de connexion 120, au moyen de deux vis 146 vissées dans des inserts taraudés correspondants 136 de ce module de connexion.

Le module de fonction 140 d'un troisième type représente en partie basse de la figure 9 comprend trois vannes 142 montées sur un corps 141 qui définit un conduit interne 143 et qui porte deux vis 146 de montage sur la face externe 124 d'un module de connexion 120, cette face externe étant équipée d'inserts taraudés 136 adaptés pour recevoir des vis 146.

En variante, un module de fonction 140 peut comprendre plusieurs conduits internes 143.

D'autres modules de fonction peuvent être envisagés, avec des géométries et/ou des nombres de vannes différents. Par exemple, un module de fonction avec un simple conduit peut être utilisé à la place de l'un de ceux représentés à la figure 9. Dans ce cas, le corps de ce module de fonction est avantageusement électriquement conducteur, ce qui permet de porter le conduit qu'il définit à un potentiel électrique défini, par exemple à la terre, en raccordant ce corps à un objet à ce potentiel.

La géométrie du corps 141 des différents modules de fonction 140 est variable selon le type de chaque module de fonction.

Les vis 146 sont métalliques, donc électriquement conductrices. Elles permettent d'immobiliser les modules de fonction 140 de façon réversible sur les modules de connexion 120, plus particulièrement sur leurs faces externes 124. Le caractère électriquement conducteur des inserts taraudés 136 et des vis 146 permet d'assurer une continuité électrique entre les modules de connexion 120 et les modules de fonction 140.

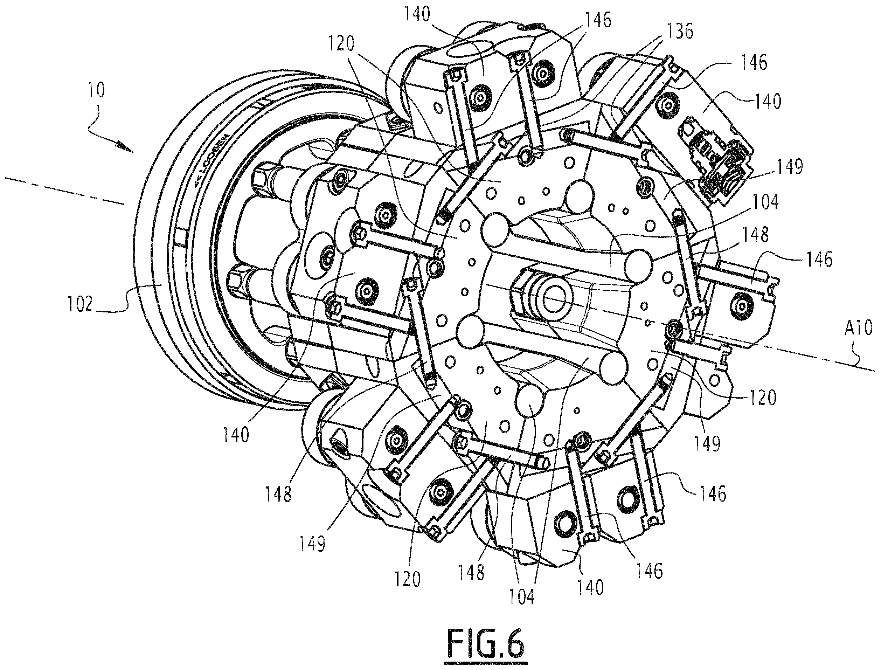

Comme le montre la figure 6, les deux vis 146 utilisées pour immobiliser de façon amovible un bloc de fonction 140 sur le bloc de connexion 120 associé sont de même longueur, mais avec des profondeurs d'implantation différentes. Ceci constitue un moyen de détrompage pour le positionnement de chaque bloc de jonction 140 sur le bloc de connexion 120 sur la face externe 124 duquel il doit être monté.

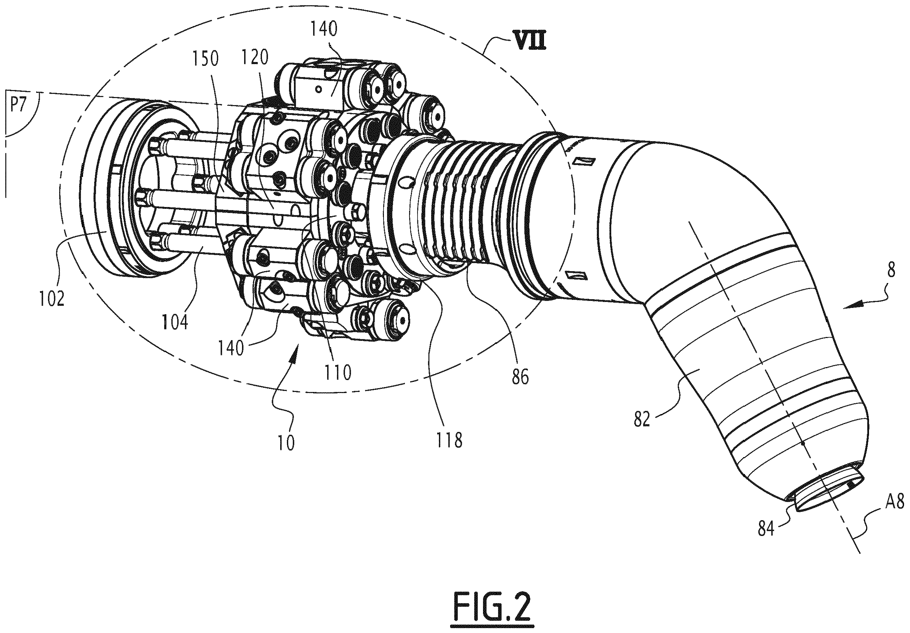

Comme cela ressort des figures 2 à 6, deux modules de fonction 140 du type de celui représenté en partie médiane de la figure 9 peuvent être montés côte à côte sur la face externe 124 d'un même module de connexion 120.

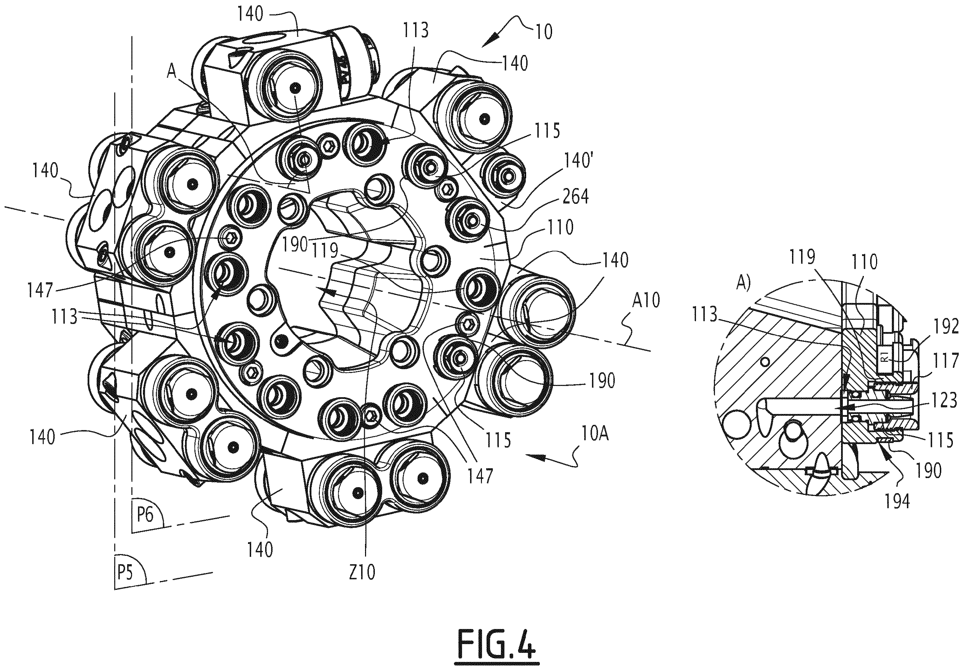

Comme visible dans le quadrant supérieur droit de la figure 4 et dans le quadrant inférieur droit de la figure 5, il est également possible de monter, sur la face externe 124 d'un ou de plusieurs module(s) de connexion 120, un premier module de fonction 140 du type de celui représenté en partie médiane de la figure 9 et un deuxième module de fonction 140' qui permet de mettre à un potentiel électrique donné, à savoir le potentiel de la platine annulaire 10, le fluide traversant le poignet 62 du robot 6 vers le projecteur. Le deuxième module de fonction 140' permet de connecter un flexible au module d'entrée 150 monté sur le même module de connexion 120, sans avoir un flexible libre au niveau du premier module de fonction 140. Le deuxième module de fonction 140' peut également être un module de nettoyage de certains organes du pulvérisateur 8, tels que le bol 84, qui permet d'injecter des trains d'air et de solvant et de l'air de séchage dans ce ou ces organe(s). Dans ce cas, le deuxième module de fonction 140' permet de dissocier le nettoyage et le séchage d'une partie arrière, formée par le dispositif d'alimentation 10, du nettoyage et du séchage d'une partie avant, formée par le pulvérisateur 8. Ces nettoyages et séchages peuvent ainsi être réalisés en parallèle, ce qui induit un gain de temps.

D'autre part, comme visible à la figure 5, des tronçons de conduit 138 sont prévus dans les différents blocs de connexion 120 et constituent ensemble un circuit C138 pneumatique de circulation d'air, qui sert à vérifier le bon serrage et le bon positionnement des différents modules de connexion 120 les uns par rapport aux autres. Le circuit C138 comprend une boucle fermée 138A qui passe par chaque module de connexion 120 et qui est constituée de tronçons de conduits 138 qui s'étendent entre les faces latérales 126 et 128 des modules de connexion 120. Le circuit C138 comprend également des branches 138B, formées par des tronçons de conduit 138, qui relient la boucle 138A aux différents modules de fonction 140 et qui débouchent sur faces externes 124 des modules de connexion 120. Les débouchés des tronçons de conduit 138 sur les faces externes et latérales 124, 126 et 128 sont entourés par des joints 139. Les joints 139 permettent d'isoler le circuit C138 vis-à-vis de l'extérieur. Il est ainsi possible, lorsque les modules de connexion 120 sont montés sur la platine 110 et les modules de fonction140 montés sur les modules de connexion, de mettre sous pression le circuit C138 afin de détecter une éventuelle fuite qui correspondrait à un montage imparfait de l'un au moins des modules de connexion 120 ou de fonction 140. A contrario, si aucune fuite n'est détectée, on peut supposer que les modules de connexion 120 et de fonction 140 sont correctement montés les uns par rapport aux autres.

Les différents blocs de connexion 120 sont immobilisés sur la platine annulaire 110 au moyen de vis métalliques 147 qui traversent la platine 110 de part en part, entre son côté avant 110A et son côté arrière 110B, et sont vissées dans des taraudages 137 qui débouchent sur la face avant 120A de chacun des modules de connexion 120. Le montage des modules de connexion 120 sur la platine 110 est ainsi réversible ou amovible, c'est-à-dire que les modules de connexion peuvent être démontés de la platine en cas de besoin.

Comme cela ressort notamment de la figure 7, les taraudages 137 sont formés par des inserts métalliques qui traversent chaque module 120 de sa face avant 120A jusqu'à sa face arrière 120B. Ainsi, les taraudages 137 débouchent également sur les faces arrière 120B des modules de connexion 120.

Compte tenu du caractère électriquement conducteur de la platine 110, des vis 147 et des inserts 137, le montage des modules de connexion 120 sur la platine 110 permet de réaliser une mise en continuité électrique de ces éléments, notamment une mise à la terre des modules de connexion 120, lorsque la platine 110 est elle-même à la terre.

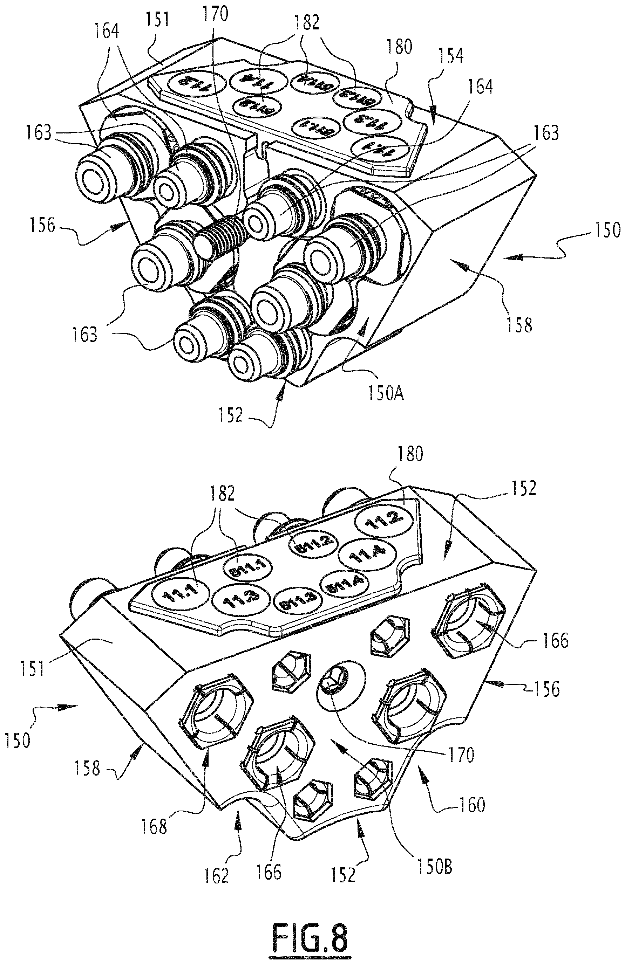

Le dispositif d'alimentation 10 comprend également des modules d'entrée 150 dont l'un est représenté en perspective sous deux angles différents à la figure 8.

Chaque module d'entrée 150 comprend un corps 151 qui est, dans le cas général, en matériau synthétique, par exemple un plastique polyoxyméthylène, de préférence sous forme copolymère telle que le PomC, ou en métal, notamment en acier inoxydable dans certains cas. Chaque module d'entrée a une forme de cylindre à base globalement trapézoïdale, avec une section analogue à celle d'un module de connexion 120. Chaque module d'entrée 150 est défini entre une face interne 152, une face externe 154 et deux faces latérales 156 et 158. Des encoches 160 et 162 sont définies de façon comparable aux encoches 130 et 132 des modules de connexion 120 et permettent de monter chaque module d'entrée 150 sur les tirants 104, comme expliqué ci-dessus au sujet des modules de connexion 120.

Les corps 151 de tous les modules d'entrée 150 du dispositif d'alimentation 10 sont identiques, ce qui est avantageux en termes de fabrication et de maintenance. En d'autres termes, quel que soit le module de connexion 120 avec lequel il coopère, chaque module d'entrée 150 conserve la même structure de base.

Le corps 151 de chaque module d'entrée 150 est équipé d'éléments de raccord fluidique 164 dont l'embouchure 166 est disposée sur la face arrière 150B du module d'entrée correspondant. Ainsi, chaque raccord fluidique 164 est accessible sur la face arrière 150B du module d'entrée 150 sur lequel il est monté.

Vu du côté arrière 10B du dispositif d'alimentation 10, les différents modules d'entrée 150 présentent la même géométrie avec des orifices 168 dont certains sont remplis par des embouchures 166 d'éléments de raccord fluidique 164.

Le module d'entrée 150 représenté à la figure 8 est équipé du nombre maximum d'éléments de raccord fluidique 164 que peut supporter son corps 151. Ceci n'est toutefois pas obligatoire et la partie haute de la figure 3 permet de distinguer des orifices 168 non occupés par des éléments de raccord 164 et d'autres orifices occupés par de tels éléments, notamment sur le module d'entrée 150 monté sur le module de connexion 120 sur lequel est également monté un module de fonction 140 avec trois vannes 142, du type du module de fonction représenté en partie basse de la figure 9.

Les éléments de raccord 164 peuvent être de types différents, en particulier avoir des diamètres différents, en fonction de la nature du fluide qui les traverse, ce fluide pouvant être du produit de revêtement, du produit de nettoyage ou de l'air.

Des vis métalliques 170 sont prévues pour immobiliser, de façon réversible, les modules d'entrée 150 chacun en appui par sa face avant 150A contre la face arrière 120B d'un module de connexion 120. Ainsi, la face 120B d'un module de connexion est une face d'entrée de fluide dans ce module.

La face arrière 150B d'un module d'entrée 150 est opposée à sa face avant 150A.

Les vis 170 sont vissées dans les taraudages 137 par leur côté qui débouche sur les faces arrière 120B des modules de connexion 120.

Comme visible en partie supérieure de la figure 8, chaque élément de raccord 164 dépasse de la face avant 150A du module d'entrée 150 dans lequel il est monté.

En conséquence, en considération du nombre et de la répartition des éléments de raccord 164 du module d'entrée 150 qui lui est associé, chaque module de connexion 120 comporte, sur sa face arrière 120B, un ou plusieurs lamages 135 qui entourent des orifices de réception 133 des embouts mâles 163 des éléments de raccord 164.

Le nombre et la répartition des éléments de raccord 164 sur chaque module d'entrée 150 sont déterminés en fonction du nombre, de la géométrie et de la répartition des conduits internes des modules de connexion 120, notamment des orifices de réception 133. Ainsi, à partir d'un même corps 151, différents modules d'entrée 150 sont constitués en y montant des éléments de raccord 164, en fonction des différents modules de connexion 120 du dispositif d'alimentation 10. En d'autres termes, le nombre et la répartition des éléments de raccord fluidique 164, donc des embouchures 166, est variable d'un module d'entrée 150 à un autre et dépend, notamment du module de connexion sur lequel il doit être monté.

Lorsqu'un module d'entrée 150 est en appui par sa face avant 150A contre la face arrière 120B d'un module de connexion 120 et lorsqu'un module de fonction 140 est en appui contre la face externe 124 du même module de connexion 120, ce module de connexion connecte, c'est-à-dire raccorde fluidiquement, le module d'entrée 150 et le module de fonction 140, au moyen de son ou de ses conduits 134.

Le dispositif d'alimentation 10 est modulaire en ce sens qu'il comprend autant de modules de connexion 120 et de modules d'entrée 150 que nécessaire pour supporter mécaniquement et alimenter fluidiquement des modules de fonction 140 utiles au bon fonctionnement du pulvérisateur 8.

Ce nombre est égal à six dans l'exemple des figures 1 à 13, mais il peut être inférieur, comme expliqué ci-dessous.

De façon avantageuse, chaque module d'entrée 150 est équipé, sur sa face externe 154 qui prolonge la face externe 124 du module 120 sur lequel il est fixé, d'une étiquette 180 qui porte des indications 182 permettant de repérer les embouchures actives 166 des éléments de raccord 164. Compte tenu de leur positionnement sur l'extérieur de la structure annulaire formée par les différents modules d'entrée 150, les étiquettes 180 sont aisément accessibles à un opérateur pour repérer la façon dont il doit connecter chaque module d'entrée 150 avec des tuyaux d'alimentation en fluide du dispositif d'alimentation 10, ces tuyaux étant représentés, uniquement à la figure 3, par leurs traits d'axe CA et classiquement constitués de tubes en matériau synthétique souple qui s'étendent en direction du dispositif d'alimentation 10, à partir du poignet 62.

En variante, seul un des modules d'entrée 150 ou certains d'entre eux sont équipés d'une étiquette 180.

En outre, comme représenté uniquement en partie basse de la figure 9 dans un souci de simplification, chacune des vannes 142 d'un module de fonction 140 peut être repérée au moyen d'une bague d'identification fendue 190 qui porte une marque 192 d'identification de la vanne et qui est montée dans une gorge 194 ménagée dans le corps du module de fonction 140 et qui entoure la vanne 142 en question. Dans l'exemple représenté en partie basse de la figure 9, les trois vannes 142 sont identifiées par leur numéro de pneumo-vanne ou « PV », à savoir PV33, PV45 et PV 46 grâce à une bague d'identification 190. La bague d'identification 190 de la pneumo-vanne PV45 est représentée en éclatée par rapport à la gorge 194 correspondante, alors que les deux autres bagues d'identification 190 sont représentées en place sur le corps 141 du module de fonction 140. Ces bagues 190 constituent chacune une étiquette de repérage d'une vanne 142 ou d'un conduit 143.

Bien entendu, l'utilisation de bagues d'identification est transposable aux autres modules de fonction 140, notamment ceux représentés en partie supérieure et médiane de la figure 9.

Comme visible notamment à la figure 4, la platine annulaire 110 est équipée de douze orifices traversant 113 entouré chacune par un manchon 119 monobloc avec le reste de la platine 110. Chaque module de connexion 120 est disposé en regard d'une paire de deux orifices traversant 113. En fonction du type du module de connexion 120, sa face avant 120A peut être équipée ou non d'un orifice de sortie d'un conduit 123 d'alimentation en produit de revêtement ou de produit de nettoyage au pulvérisateur 8. Le produit de revêtement ou de nettoyage parvenant jusqu'à un tel orifice de sortie circule dans le conduit 123, qui est interne au module de connexion 120, en provenance du module de fonction 140 monté sur ce module de connexion.

Un raccord 115 est immobilisé par une bague vissée 117 dans chaque orifice traversant 113 disposé en regard d'un orifice de sortie d'un conduit d'alimentation 123 d'un module de connexion 120. Chaque raccord 115 est ainsi alimenté en produit revêtement et/ou en produit de nettoyage.

Ainsi, il est possible de brancher, sur les raccords 115 qui équipent la platine annulaire 110, des raccords complémentaires appartenant au pulvérisateur 8, pour l'alimentation de celui-ci en produit de revêtement et/ou en produit de nettoyage, selon les séquences de fonctionnement prévues pour ce pulvérisateur 8.

Ainsi, certains au moins des modules de connexion 120 ont pour fonction de connecter, c'est-à-dire de raccorder fluidiquement, un module de fonction 140 avec la platine 110, plus particulièrement avec un ou des raccords 115 de la platine 110, au moyen de leurs conduits d'alimentation 123. La platine 110 constitue donc une partie de sortie ou une partie aval du dispositif d'alimentation 10.

Comme visible à la figure 12, plusieurs modules de connexion 120 sont pourvus d'un conduit d'alimentation 123. Ainsi, le dispositif d'alimentation 10 comprend plusieurs conduits d'alimentation 123 et autant de raccords 115.

Comme le produit de revêtement traverse nécessairement la platine 110 qui est mise à la terre et qui est conductrice, le produit de revêtement est également mis à la terre à ce niveau.

Pour faciliter le repérage des raccords 115, et comme représenté uniquement sur la figure 4 et son insert A) une bague d'identification fendue 190, qui porte une marque 192 d'identification d'un raccord 115, est montée dans une gorge 194 ménagée sur l'extérieur du manchon 119 qui entoure l'orifice traversant 113 dans lequel est monté ce raccord 115. Ici, la marque d'identification est le numéro du raccord 115, dans l'exemple R1. Chaque bague fendue 190 entoure le raccord 115 qu'elle identifie. Un bague d'identification 190 est montée autour de chaque manchon 119 qui entoure un orifice traversant 113 dans lequel est immobilisé un raccord 115. Les bagues 190 constituent chacune une étiquette de repérage d'un raccord 115.

Les bagues d'identification 190 sont montées sur les modules de fonction 140 et sur la platine annulaire 110 de façon amovible, par encliquetage dans les gorges 194, en cours de fabrication du dispositif d'alimentation 10. En fonction d'éventuelles modifications de ce dispositif, elles peuvent être déplacées, supprimées ou remplacées.

En variante, d'autres types d'étiquettes d'identification des vannes 142, des conduits 123 ou des raccord 115 peuvent être utilisées. Leur montage amovible sur les corps 141 ou sur la platine 110 peut être effectué par des moyens autre qu'un encliquetage.

En configuration montée du dispositif d'alimentation 10, une zone centrale Z10 du dispositif d'alimentation 10, qui est définie par la platine 110 et qui se prolonge le long de l'axe A10 jusqu'au niveau des modules 120 et 150, est laissée libre par la structure annulaire du dispositif d'alimentation 10. Cette zone centrale Z10 peut être utilisée pour y faire circuler des conduits d'alimentation du pulvérisateur 8 en fluide, notamment en air de commande, ou des connecteurs ou des câbles d'alimentation électrique de celui-ci. Ces conduits et ces câbles d'alimentation sont représentés respectivement, uniquement à la figure 3, par leurs traits d'axe CA et CB.

Dans l'exemple de figures où le pulvérisateur 8 inclut une unité haute tension 9, un connecteur 200 peut être monté dans la zone Z10, comme visible à la figure 3 où seule l'enveloppe extérieure du connecteur 200 est représentée.

En variante non représentée, si le pulvérisateur 8 est dépourvu d'une unité haute tension, un ou des câbles d'alimentation en haute tension de ce pulvérisateur peuvent traverser la zone centrale Z10 la partie 86 du pulvérisateur 8 pour être raccordés directement sur le corps 82.

Comme cela ressort des figures 6 et 12, des vis 148 sont insérées dans les modules de connexion 120 et s'étendent en saillie par rapport à l'une au moins de leurs faces latérales, afin d'être vissées dans un module de connexion 120 adjacent. Des inserts métalliques 149 sont prévus dans les différents modules de connexion 120 pour recevoir les vis 148 des modules de connexion adjacents, ce qui permet, d'une part, un bon ancrage mécanique des modules de connexion entre eux et autour de l'axe A10, c'est-à-dire un montage pérenne entre deux modules de connexion adjacents, et, d'autre part, une mise en continuité électrique entre les modules de connexion 120. Cette mise en continuité électrique est également effectuée avec les modules de fonction 140 dont les vis 146 s'étendent jusque dans ces inserts 149, comme visible à la figure 6.

Ainsi, les vis 146, 147, 148 et 170 et les inserts 136, 137 et 149 forment ensemble une piste équipotentielle entre les modules de connexion 120, les modules de fonction 140, les modules d'entrée 150 et la platine annulaire 110 qui est en matériau conducteur. La mise à la terre de la platine annulaire est ainsi reportée sur les modules 120, 140 et 150.

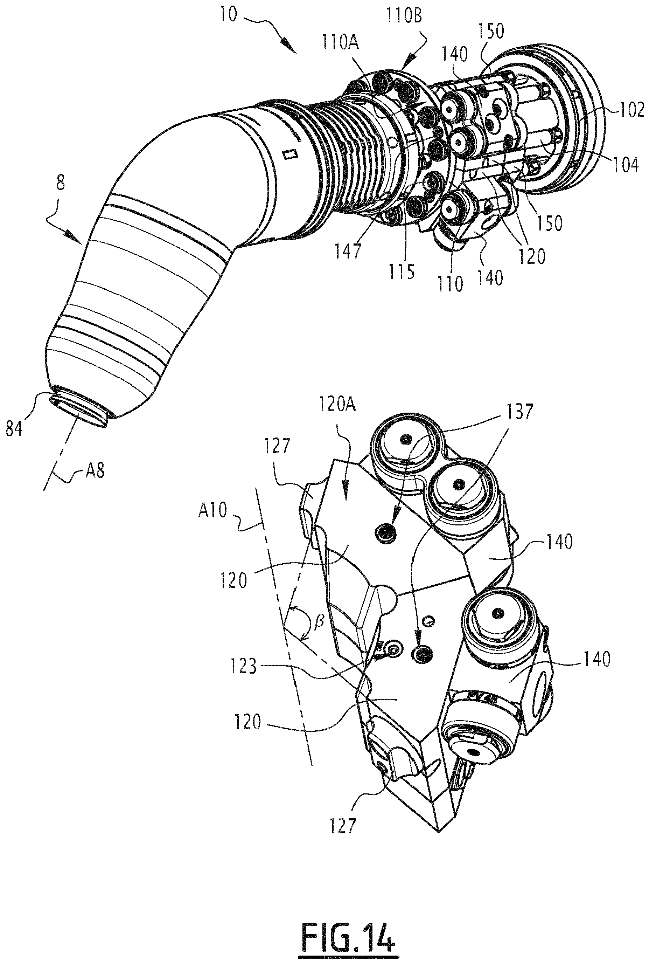

Dans le deuxième mode de réalisation de l'invention représenté à la figure 14, les éléments analogues à ceux du premier mode de réalisation portent les mêmes références. Si une référence est utilisée sur la figure 14 sans être mentionnée dans la description, elle correspond à l'objet portant la même référence dans le premier mode de réalisation. A l'inverse, si une référence est mentionnée dans la description sans être portée sur la figure 14, elle correspond à l'objet portant la même référence pour le premier mode de réalisation. Dans ce qui suit, l'on décrit principalement ce qui distingue le deuxième mode de réalisation du premier mode de réalisation.

Dans le deuxième mode de réalisation, le dispositif d'alimentation 10 comprend seulement deux modules de connexion 120, deux modules de fonction 140 et deux modules d'entrée 150 qui sont montés, de façon amovible grâce à des vis 147, côte à côte, sur le côté arrière 110B de la platine annulaire 110.

Dans le deuxième mode de réalisation, la structure formée par les modules 120, 140 et 150 ne s'étend pas sur 360° autour de l'axe A10, comme dans le premier mode de réalisation mais sur un angle β égal à environ 120°. Dans l'exemple de la figure 14, les deux modules de connexion 120 sont identiques et ils portent chacun un bouchon 127, ce qui correspond à la configuration du module 120 représentée en partie basse de la figure 11.

Comme visible à la figure 11, chaque bouchon 127 est immobilisé de façon amovible sur le module de connexion 120 correspondant, au moyen d'une vis 129 qui est insérée dans un insert 149, à la place d'une des vis 148 mentionnées au sujet du premier mode de réalisation.

Dans le deuxième mode de réalisation, un seul module de connexion 120 est pourvu d'un conduit d'alimentation 123. Ainsi, le dispositif d'alimentation 10 comprend un unique conduit d'alimentation123 et un unique raccord 115 monté sur la platine 110.

En variante, le nombre de modules de connexion 120 peut être compris entre 3 et 5, en fonction du nombre de modules de fonction 140 nécessaires pour le fonctionnement du pulvérisateur 8. Dans ce cas, le nombre de modules d'entrée 150 est adapté au nombre de modules de connexion 120.

Quel que soit le mode de réalisation et selon un aspect de l'invention qui n'est pas représenté sur les figures, un capot entoure le dispositif d'alimentation 10, entre le poignet 62 et le corps 82 du pulvérisateur pour éviter qu'il soit sali en cours d'application de produit de revêtement, notamment par des retours de peinture, parfois dénommés « oversprays ».

Comme mentionné ci-dessus, certains des corps 121, 141 et 151, notamment les corps 141 des modules de fonction 140, peuvent être réalisés dans un matériau électriquement conducteur, notamment en aluminium ou en acier inoxydable, voire dans un matériau électriquement isolant. L'avantage d'un corps 141 de module de fonction 140 en matériau conducteur réside dans sa capacité à transmettre le potentiel électrique de la piste équipotentielle formée par les vis 146, 147, 148 et 170 et les inserts 136, 137 et 149, reliée à la platine 110, à chacun des composants conducteurs compris dans le module de fonction 140, par exemple les composants fluidiques.

Si le corps 141 d'un module de fonction 140 est réalisé en matériau synthétique, par exemple un matériau plastique, il comprend avantageusement des inserts métalliques agencés pour former une piste équipotentielle entre les éléments fluidiques du module de fonction 140 et les vis 146 agencées pour se fixer dans les inserts 149.

En résumé, c'est la platine 110 qui permet de porter à un même potentiel, ici à la masse, tous les fluides qui alimentent le pulvérisateur 8. Les corps 121, 141 et 151 des modules 120, 140 et 150 peuvent être réalisés dans des matériaux électriquement conducteurs ou électriquement isolants, notamment métalliques. Si ces matériaux sont électriquement isolants, les inserts permettent de réaliser une équipotentielle de toutes parties métalliques entre elles et avec la platine 10, ce qui évite que les vis de fixation soient à un potentiel flottant. Si ces matériaux sont électriquement conducteurs, l'équipotentielle a lieu sans nécessiter l'utilisation des inserts. Le choix des matériaux des corps 121, 141 et 151 dépend de la nature du ou des fluides à acheminer, par exemple s'il s'agit d'un produit de revêtement bi-composant, et/ou de la possible complexité de mise en place des inserts dans le cas de matériaux électriquement isolants.

L'invention est applicable avec un pulvérisateur de type électrostatique, ou non électrostatique, équipé ou non d'un bol tournant.

L'invention est représentée sur les figures dans le cas où chaque module de connexion 120 et chaque module d'entrée 150 s'étend sur un secteur angulaire dont l'angle au sommet α120, pris autour de l'axe A10, vaut 60°. En variante, cet angle peut être différent, par exemple égal à 45°, auquel cas le nombre maximum de modules de connexion 120 est de huit. D'autres valeurs de cet angle au sommet et du nombre de modules de connexion peuvent être envisagées.

L'invention est représentée sur le figures dans le cas où le pulvérisateur 8 est utilisé pour appliquer un produit de revêtement sur une carrosserie C de véhicule automobile. Elle est également applicable dans le cas où ce pulvérisateur est utilisé pour appliquer un produit de revêtement sur un composant de véhicule, tel qu'un pare-chocs ou une jante, sur une carcasse de produit électroménager ou sur tout autre objet devant être revêtu.

Les modes de réalisation et variantes mentionnés ci-dessus peuvent être combinés pour générer des nouveaux modes de réalisation de l'invention.

## Revendications

1. Dispositif d'alimentation (10) d'un pulvérisateur (8) en produit de revêtement et/ou en produit de nettoyage, ce dispositif comprenant au moins une vanne pilotée (142), un conduit (134) d'amenée de produit à la vanne et au moins un conduit (123) d'alimentation du pulvérisateur à partir de la vanne, **caractérisé en ce que**
- le dispositif d'alimentation a une structure annulaire et comprend
• une platine annulaire (110),
• plusieurs modules de connexion (120),
• plusieurs modules de fonction (140) et
• plusieurs modules d'entrée (150);
- la platine (110) est équipée d'orifices traversant (113);
- chaque module de connexion (120) est monté, de façon amovible, en appui, par une face de contact (120A), contre un côté (110B) de la platine annulaire ;
- chaque module de connexion (120) comprend au moins un conduit (134) d'amenée de produit à au moins une vanne pilotée (142) ;
- chaque module de fonction (140) est monté, de façon amovible, sur une face externe (124) d'un module de connexion (120) distincte de sa face de contact avec la platine annulaire ;
- chaque module de fonction (140) est raccordé fluidiquement au conduit d'amenée (134) du module de connexion sur la face externe duquel il est monté 5
- chaque module de fonction comprend, soit au moins une vanne pilotée (142) et au moins un conduit (143), soit un tronçon de conduit destiné à être mis à la terre ;
- chaque module d'entrée (150) est monté, de façon amovible, sur une face d'entrée (120B) d'un module de connexion (120) qui est opposée à sa face de contact (120A); et
- chaque module d'entrée (150) porte des éléments de raccord fluidique (164) accessibles sur une face (150B) de ce module d'entrée orientée à l'opposé du module de connexion (120) sur la face d'entrée (120B) duquel il est monté.

2. Dispositif d'alimentation selon la revendication 1, **caractérisé en ce que** des corps (151) de tous les modules d'entrée (150), qui sont équipés des éléments de raccord fluidique (164), sont identiques entre eux.

3. Dispositif d'alimentation selon l'une des revendications précédentes, **caractérisé en ce qu'**au mois un module d'entrée (150), et de préférence chaque module d'entrée, est équipé d'une étiquette (180) qui porte des marques (182) de repérage de ses éléments de raccord fluidique (164), cette étiquette étant, de préférence, apposée sur une face (154) du module d'entrée qui prolonge la face externe (124) du module de connexion (120) sur la face d'entrée (120B) duquel est monté le module d'entrée.

4. Dispositif d'alimentation selon l'une des revendications précédentes, **caractérisé en ce qu'**au moins un module de fonction (140), de préférence chaque module de fonction, et/ou la platine (110) est équipé d'une étiquette (190) de repérage de vannes (142), de conduits (123) ou de raccords (115), cette étiquette étant montée de façon amovible sur une partie fixe (141, 119) du module de fonction ou de la platine.

5. Dispositif d'alimentation selon l'une des revendications précédentes, **caractérisé en ce que** chaque module de connexion (120) porte au moins un module de fonction (140, 140') sur sa face externe (124) et un unique module d'entrée (150) sur sa face d'entrée (120B).

6. Dispositif d'alimentation selon l'une des revendications précédentes, **caractérisé en ce que** les modules de connexion (120) définissent ensemble une structure annulaire ou une structure en portion d'anneau, au sein de laquelle s'étend un circuit (C138) de contrôle qui passe par chaque module de connexion.

7. Dispositif d'alimentation selon l'une des revendications précédentes, **caractérisé en ce qu'**il comprend des barres (104) parallèles qui supportent la platine annulaire (110) et **en ce que** chaque module de connexion (120) et/ou chaque module d'entrée (150) est en appui sur une paire de deux barres parallèles adjacentes.

8. Dispositif d'alimentation selon l'une des revendications précédentes, **caractérisé en ce que** la platine annulaire (110) est en matériau électriquement conducteur et **en ce que** chaque module de connexion (120), comprend au moins un insert taraudé (136, 137, 149), en matériau électriquement conducteur, chaque insert taraudé étant configuré pour recevoir une vis (146, 147, 148, 170) de montage d'un module de connexion sur la platine annulaire et/ou sur un module de connexion adjacent, d'un module de fonction (140) sur un module de connexion ou d'un module d'entrée (150) sur un module de connexion, et **en ce que** les vis (146, 147, 148, 170) et les inserts taraudés (136, 137, 149) forment ensemble une piste équipotentielle entre les modules de connexion (120), les modules de fonction (140), les modules d'entrée (150) et la platine annulaire (110) .

9. Module de connexion (120) formant pièce détachée pour un dispositif d'alimentation (10) selon l'une des revendications précédentes et comprenant :
- une face de contact (120A) destinée à venir en appui, de façon amovible, contre un côté (110B) de la platine annulaire (100) ;
- une face externe (124), distincte de la face de contact, et destinée à recevoir, de façon amovible, au moins un module de fonction (140) ; et
- une face d'entrée (120B) opposée à sa face de contact et destinée à recevoir, de façon amovible, un module d'entrée (150).

10. Module de fonction (140) formant pièce détachée pour un dispositif d'alimentation (10) selon l'une des revendications 1 à 8 et comprenant :
- au moins une vanne pilotée (142) ;
- au moins un conduit interne (143) ; et
- des moyens (146) de montage amovible sur une face externe (124) du module de connexion.

11. Module d'entrée (150) formant pièce détachée pour un dispositif d'alimentation (10) selon l'une des revendications 1 à 8 et comprenant :
- une première face (150A) destinée à venir en appui, de façon amovible, contre une face d'entrée (120B) d'un module de connexion (120) ; et
- une deuxième face (150B), opposée à la première face et par laquelle sont accessibles des embouchure (166) d'éléments de raccord fluidique (164) portés par le module d'entrée.

12. Installation (2) d'application de produit de revêtement comprenant un robot (6), de préférence multiaxe, et un pulvérisateur (8) monté sur un bras (61) du robot et alimenté en produit de revêtement et/ou en produit de nettoyage par un dispositif d'alimentation (10) selon l'une des revendications 1 à 8.

13. installation d'application selon la revendication 12, **caractérisée en ce que** des conduits (CA) d'alimentation en air de commande de pneumo-vannes, un connecteur (200) et/ou des câbles (CB) d'alimentation électrique du pulvérisateur (8) en haute-tension traversent ou sont logés dans une zone centrale (Z10) du dispositif d'alimentation (10) définie la platine annulaire (110).
